# EUROPEAN PATENT SPECIFICATION

(11) **EP 1 853 442 B1**
(45) Date of publication and mention of the grant of the patent: **14.11.2018**
(21) Application number: 06704938.7
(22) Date of filing: 01.03.2006
(51) Int. Cl.: B60G 17/00, B60G 21/06

(54) **HYDRAULIC SYSTEM FOR A VEHICLE SUSPENSION**
HYDRAULIKSYSTEM FÜR EINE FAHRZEUGAUFHÄNGUNG
SYSTÈME HYDRAULIQUE POUR SUSPENSION DE VÉHICULE

(30) Priority: 01.03.2005 AU 2005900942
(43) Date of publication of application: 14.11.2007
(73) Proprietor: Kinetic Pty Ltd., Dunsborough WA 6281 (AU)
(72) Inventor: TAYLOR, James, Lind c/o Core Eng. Dept. METC, 3800 Sint-Truiden (BE); MUNDAY, Raymond, Andrew, Caroline Springs, VIC 3023 (AU); MONK, Richard, Busselton, W.A. 6280 (AU)
(74) Representative: HGF Limited
(86) International application number: PCT/AU2006/000264
(87) International publication number: WO 2006/092012

(56) References cited:
- WO-A1-00/61393
- WO-A1-2004/076211
- GB-A- 2 160 830
- US-A- 5 269 556
- US-A1- 2004 080 124

## Description

### FIELD OF THE INVENTION

The present invention is generally directed to suspension systems for vehicles, and in particular to a hydraulic system providing control of one or more suspension parameters.

### BACKGROUND

There are known many alternate interconnected suspension systems which have the ability to passively differentiate between different modes of wheel motion with respect to the vehicle body and therefore provide a variety of alternatives in functionality. For example, the applicant's US patent number 6,270,098 provides a pressure balancing "load distribution" unit between two pairs of diagonally interconnected double acting wheel rams. This system provides different heave, roll and pitch stiffness rates with zero warp stiffness and different damping rates in all four base suspension modes (heave, roll pitch and warp). This system supports the weight of the vehicle, so as the loads on the vehicle change, or as the fluid temperature changes, the volume of fluid in each of the six volumes in the system must be adjusted. Also, as the six volumes in the system can in some load conditions, all be at different pressures, there is the possibility for fluid to leak across seals, which also requires fluid volume adjustments to be made to maintain the correct vehicle attitude. This requires a high pressure fluid source, sensors, control electronics and valves, making the cost of the system relatively high for a passive system.

Similarly in EP 1 426 212 and International Application Number PCT/EP2004/004885 there are disclosed a number of passive hydraulic systems providing support of the vehicle and roll stiffness with zero warp stiffness. As these hydraulic systems provide support of the vehicle they have similar disadvantages to the applicant's aforementioned US patent number 6,270,098.

An example of a passive hydraulic system providing high roll stiffness with low warp stiffness and negligible heave stiffness and providing high roll damping with lower, more comfortable and isolating heave damping can be found in the applicant's US patent number 6,761,371. As the system does not provide significant heave stiffness, separate support springs are required. This hydraulic system does not provide pitch stiffness and damping, however the applicant's International Application WO/2004/076211 discloses a similar system with the addition of modal pitch damping. The roll moment distribution of these systems is fixed by the front and rear wheel ram sizes and these systems essentially have only one main mode of operation.

An example of a system having just roll and/or pitch damping can be found in US patents numbers 5,486,018 and 6,024,366. The systems disclosed in these documents use a device between a pair of wheel damping rams, each wheel damping ram having a damper valve in its piston to provide double-acting damping but make the ram single-acting (i.e. there is only fluid port). The device provides for independent levels of damping for in-phase (i.e. heave) and out of phase (i.e. roll and/or pitch) motions. However, most of these systems do not provide significant stiffness in any mode, so in addition to the need for support springs, generally anti-roll bars will be required for a good balance between bounce and roll stiffness rates front and rear. Additionally, as the wheel rams are effectively single acting (having only one fluid port) the amount of damping that the device can provide is limited. There are improvements made to the system to combat this problem, which can be found in Japanese patent office publication number 11291737, but these add to the complexity of the system by providing more plumbing and spool valves.

It is therefore an object of the present invention to provide a hydraulic system for a vehicle suspension that alleviates at least one of the disadvantages of abovementioned earlier vehicle suspension systems. It is a preferred object of the present invention to provide a hydraulic system having roll stiffness, roll damping, independent heave damping and switchable both warp stiffness and roll moment distribution, all of which can be configured and tuned substantially independently from each other to enable optimisation of each parameter.

### SUMMARY OF THE INVENTION

The present invention provides a suspension system for a vehicle as defined in claim 1. Specifically, there is provided a suspension system for a vehicle, the vehicle including a vehicle body and at least two forward and two rearward wheel assemblies, the suspension system including a hydraulic system, the hydraulic system including:
at least one front left, at least one front right, at least one rear left and at least one rear right wheel ram respectively located between the wheel assemblies and the vehicle body, each wheel ram including at least a compression chamber;
the compression chamber of each wheel ram being in fluid communication with a respective compression conduit forming a front left fluid volume, a front right fluid volume, a rear left fluid volume and a rear right fluid volume;
a first flow control means and a second flow control means;
the front left and rear left fluid volumes being in fluid communication with the first flow control means, the first flow control means controlling the fluid communication between the front left and rear left fluid volumes; and
the front right and rear right fluid volumes being in fluid communication with the second flow control means, the second flow control means controlling the fluid communication between the front right and rear right fluid volumes,
wherein, when fluid is permitted to flow through the first and second flow control means roll motions of the vehicle are resisted by the hydraulic system, while warp motions of the wheels relative to the vehicle body are permitted by the hydraulic system, and
a compression chamber damper valve between the compression chamber of each wheel ram and the respective compression conduit;
the suspension system being characterised by at least two of the wheel rams at one end of the vehicle further including a rebound chamber, each rebound chamber being in fluid communication with the compression chamber of the laterally adjacent wheel ram;
and by each rebound chamber including a rebound chamber damper valve in direct fluid communication with the compression chamber damper valve of the compression chamber of the laterally adjacent wheel ram.

Preferably the suspension system may include front and rear resilient vehicle support means between the vehicle body and the wheel assemblies for resiliently supporting the vehicle above the wheel assemblies.

The first and/or second flow control means may include a damping means.

The first and/or second flow control means may alternatively or additionally include a lockout valve.

The first flow control means may be a left longitudinal flow control means, and the second flow control means may be a right longitudinal flow control means.

The front wheel rams may be double-acting and therefore include a rebound chamber, wherein the compression chamber of one front wheel ram may be in fluid communication with the rebound chamber of the laterally adjacent wheel ram.

Similarly, the rear wheel rams may be double-acting and therefore include a rebound chamber, wherein the compression chamber of one rear wheel ram
may be in fluid communication with the rebound chamber of the laterally adjacent wheel ram.

The vehicle may be primarily supported by the resilient vehicle support means.

The vehicle support means may be any known support means such as coil springs, air springs, torsion bars, leaf springs and rubber cones. The vehicle support means may, in the case of coil springs and air springs, be mounted around the wheel rams or mounted separately.

The vehicle support means for at least one end of the vehicle may include first support means for providing support for at least a portion of the load on the vehicle, the first support means providing a roll stiffness.

The vehicle support means for at least one end of the vehicle may include second support means for providing support for at least a portion of the load on the vehicle, the second support means providing substantially zero roll stiffness.

Any combination of first and/or second support means may be used at either or both ends of the vehicle.

At least one fluid pressure accumulator may be provided for one or more of the front left, front right, rear left and/or rear right fluid volumes. One or more of such accumulators may be in fluid communication with the respective fluid volume. Damping means may be provided for damping the flow of fluid into and/or out of at least one of the accumulators.

The hydraulic suspension system according to one or more embodiments of the present invention allows for independent tuning and configuration of suspension parameters, including roll stiffness, roll moment distribution, roll damping and heave damping. Thus, optimisation of as many of these suspension parameters as possible may be achieved.

If the vehicle support means are the primary means of vehicle support, all of the volumes in the hydraulic system may preferably be run at substantially the same pressure. Also, as the system contains hydraulic fluid and/or gas, both of which expand with increasing temperature, a pressure compensation arrangement may be provided to help maintain system static pressure and roll stiffness within a chosen tolerance over a chosen temperature range. This pressure compensation arrangement may also be used to compensate for any fluid loss over time. Therefore, a pressure maintenance device may be provided connected to at least two, preferably each of the fluid volumes through respective restrictions or valves.

The pressure maintenance device, when fitted, may be a simple accumulator connected through a restriction to one or more of the fluid volumes. Alternatively, or in addition, the pressure maintenance device may include a pump, tank and fluid transfer control devices.

The pressure may be controlled (using pressure maintenance components and/or alternative devices) to be different in the left fluid volumes to the right fluid volumes to provide roll attitude control, either at low frequency, or actively at higher frequency. Similarly, the pressure may be controlled to be different in the front fluid volumes to the rear fluid volumes (again using pressure maintenance components and/or alternative devices) to provide roll moment distribution control, either at low frequency, or actively at higher frequency.

If the first and/or second flow control means includes a lockout valve, this valve may be used to switch between permitting fluid communication (in which case the hydraulic system provides substantially zero warp stiffness) and preventing fluid communication (in which case the hydraulic system provides a warp stiffness). The lockout valve can be controlled manually or automatically. The lockout valve may be used to switch between an on-road setting with warp stiffness or an off-road setting without warp stiffness, but maintaining a roll stiffness. The lockout valve may be used to switch between two different settings of roll moment distribution of the hydraulic system. The lockout valve may permit fluid communication in normal operation and be controlled to close to prevent wheel lift or in the event of a failure in the hydraulic system.

If the longitudinal flow control means includes a damper means, the damper means may be a passive restriction or passive multi-stage damper valve, or it may be controlled to provide a variable restriction in dependence on sensed vehicle operation or events.

Additionally or alternatively, at least one valve may be provided between the front fluid volumes and/or at least one valve may be provided between the rear fluid volumes for removing the roll stiffness of the hydraulic system.

The accompanying drawings illustrate preferred embodiments of the present invention. Other arrangements are possible, and consequently the particularity of the accompanying drawings is not to be understood as superseding the generality of the preceding description of the invention.

### DETAILED DESCRIPTION OF THE DRAWINGS

In the drawings:
Figure 1 is a schematic view of a first preferred embodiment of a hydraulic system according to the present invention, including optional pressure maintenance;
Figure 2 is a schematic view of a variation of the first preferred embodiment of the hydraulic system;
Figure 3 is a schematic view of another variation to the first preferred embodiment of the hydraulic system; and
Figure 4 is a schematic view of a second preferred embodiment of a hydraulic system according to the present invention incorporating active roll attitude and roll moment distribution control actuators.

### DESCRIPTION OF PREFERRED EMBODIMENT

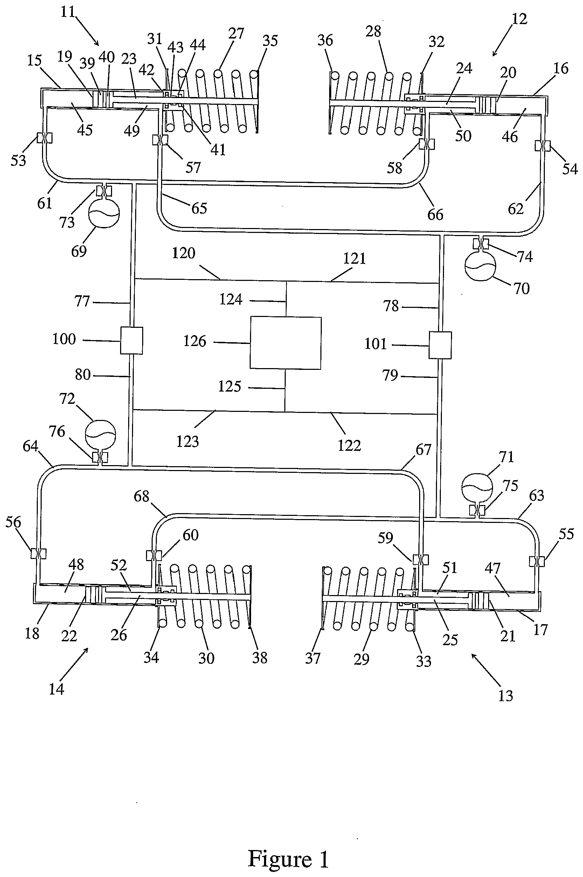

Referring initially to figure 1, there is shown a suspension system for a vehicle. Four wheel rams (11, 12, 13, and 14) are located between the vehicle body (not shown) and four orthogonally disposed wheels (not shown) of the vehicle. Each wheel ram includes a cylinder (15, 16, 17, 18) connected to a wheel hub or other suspension geometry to move with the wheel, a piston (19, 20, 21, 22) slidably housed within the cylinder, and a rod (23, 24, 25, 26) fixed between the piston and the body of the vehicle. The connection of the rod to the vehicle body may be by any known means, usually through a rubber bushing which in the case of MacPherson strut geometry usually includes a bearing.

For ease of understanding, the vehicle resilient support means are shown as "coil-overs", *ie* coil springs (27, 28, 29, 30) positioned around the wheel ram and located between a lower spring plate (31, 32, 33, 34) fixed to the cylinder and an upper spring plate (35, 36, 37, 38) which may be connected to the vehicle body or the rod (directly or indirectly such as via a bearing or bushing). It should be understood that the resilient support means may be of any alternative known type such as for example air springs and may be located around the cylinder as shown with the coil springs or separate to the ram, which broadens the alternatives, for example, to torsion bars connected to the geometry providing wheel location. The resilient support means may provide support and some roll stiffness (such as with independent torsion bars or coil springs for each wheel) or they may provide support with zero roll stiffness (such as with air springs, hydraulic cylinders or torsion bars connected between laterally adjacent wheels) or any combination of support means may be used with and without roll stiffness at one or both ends of the vehicle. This type of variation of support means for use with a separate roll control system are described in detail in the applicant's US patent number US 6,217,047.

Also the wheel ram may be inverted with the cylinder portion connected to the vehicle body and the piston rod connected to the wheel hub or other suspension geometry to move with the wheel. This has the advantage that the fluid connections between the cylinder and the remainder of the hydraulic system are located relative to the vehicle body rather than relative to the wheel, thereby reducing the displacement required of the hoses providing said fluid connections. In this case, and especially if the support springs are positioned around the wheel ram, the cylinder 15 can be slidably and rotatably mounted inside an outer tube, the rod being fixed to the outer tube which can in turn be connected to the wheel hub or other suspension geometry. The outer tube also can support the lower spring plate - the upper spring plate then being mounted either to the cylinder or directly to the body.

It should be noted that the wheel rams at one or both ends of the vehicle can be single-acting, i.e. the wheel ram may either have no piston, the rod displacement causing displacement of fluid into or out of the compression chamber, although it is preferable to use a piston to form a rebound chamber, the rebound chamber of the ram being connected to the compression chamber through a damper valve to provide acceptable levels of rebound damping not limited by cavitation. However, the wheel rams shown in the figures are basically conventional double-acting rams for simplicity. Taking the front left wheel ram 11 as an example, the piston 19 (which may be formed as an integral part of the rod 23) has two grooves containing a bearing 39 and a seal 40. In some cases, the individual bearing and seal parts can be replaced by a single item (not shown) which may be bonded to or formed around the piston for ease of assembly and low cost. The cylinder end (41) has three grooves containing a rod seal 42, a bearing 43 and a rod wiper 44 or other form of secondary seal such as an excluder. Each ram therefore has a compression chamber (45, 46, 47, and 48) and a rebound chamber (49, 50, 51, and 52) formed by the piston (19, 20, 21, and 22) within each cylinder (15, 16, 17, and 18).

The direct damping of each wheel ram is accomplished by the provision of compression (53-56) and rebound (57-60) damper valves mounted on conduits (61-68) close to the compression and rebound chambers of each wheel ram. These wheel damper valves can be single-acting, working on restricting fluid flow out of either a compression or a rebound chamber, or they may be double acting, in which case only one valve (on either the compression or preferably on the rebound chamber) may be utilised. The wheel damper valves can be located in the wheel ram body where there is package space, or attached to the wheel ram body or in the conduits as shown. The wheel damper valves may be of any known type including simple passive orifices, multi-stage passive orifice and shim based damper valves with optional blow-off springs, switched damper valves (controlled either between selectable settings such as comfort, normal and sport, or in dependence on steering and other inputs) or controlled continuously variable damping which can include algorithms to control wheel hop and whole body motions.

The four double-acting wheel rams are cross-connected in pairs front and rear forming front and rear fluid circuits, each comprising a left and a right fluid volume. The front left fluid volume is formed by the front left compression chamber 45, front left compression conduit 61, front right rebound conduit 66 and front right rebound chamber 50. The front right fluid volume is formed by the front right compression chamber 46, front right compression conduit 62, front left rebound conduit 65 and front left rebound chamber 49. Similarly, the rear left fluid volume is formed by the rear left compression chamber 48, rear left compression conduit 64, rear right rebound conduit 67 and rear right rebound chamber 51 and the rear right fluid volume is formed by the rear right compression chamber 47, rear right compression conduit 63, rear left rebound conduit 68 and rear left rebound chamber 52.

Accumulators 69, 70, 71 and 72 are shown on each of the fluid volumes to provide resilience in the hydraulic system, although this is not necessary if other sources of compliance are available, for example if the fluid is compressible or if the conduits (or portions of the conduits) expand an appropriate amount with pressure change. The advantage of providing resilience in a known point using an accumulator, rather than distributed through the fluid volume (ie with compressible fluid) is that the resilience can be damped independently of the wheel damping. Each accumulator should be positioned along the compression or rebound conduits at any point between the compression and rebound wheel damper valves if provided. Accumulator damper valves 73, 74, 75 and 76 provide damping of the fluid flow between each fluid volume and the respective accumulator.

With the above described simple front and rear pair of fluidly connected wheel rams, the fluid displacement in different modes would be as follows:
a) in roll, when the vehicle is cornering to the right, centrifugal forces act on the body towards the left and the vehicle body rolls to the left, displacing fluid out of both the front left compression chamber and the front right rebound chamber into the front left accumulator 69 and out of the rear left compression chamber and rear right rebound chamber into the rear left accumulator 72. There is also an ingress of fluid into the front right compression chamber and the front left rebound chamber, supplied by the front right accumulator 70 and into the rear right compression chamber and the rear left rebound chamber, supplied by the rear right accumulator 71.
   The roll stiffness and RMD of the system will be primarily be determined by the piston areas and the fluid volume displaced from the front and rear wheel rams and the resilience of each individual compression and rebound conduit volume.
b) in warp, when the front left and rear right wheels are on higher ground than the front right and rear left wheels, then there is an excess of fluid in the front left and rear right fluid volumes and a demand for more fluid in the front right and rear left fluid volumes. As this is essentially a roll motion of the front pair of wheels in the opposite direction to that of the rear pair of wheels and as the front fluid volumes are independent from the rear fluid volumes in this simple example, the warp stiffness provided by this simple hydraulic system is directly related to the roll stiffness provided by the hydraulic system.
c) in heave and pitch the difference between the fluid displaced into or out of the compression chamber of one wheel ram and the fluid displaced out of or into the rebound chamber of the laterally adjacent wheel ram is equal to the rod volume displaced in the motion. This rod volume is all that is displaced into or out of the accumulators in heave and pitch motions.

The high relative volume displaced in the roll and warp modes relative to the heave and pitch modes gives a higher roll and warp stiffness than heave and pitch stiffness. It also means that if damper valves are used to damp the flow of fluid into and/or out of the accumulators, this damping has a greater effect in roll and warp than in heave or pitch.

Therefore, the larger the difference between the cylinder diameter and the rod diameter of each cylinder, the larger the ratio between the roll (and warp) stiffness (and damping) of the system and the heave (and pitch) stiffness (and damping) of the system.

Furthermore, as the coil springs or other support means independent of the hydraulic system provide a large portion of the support for the load on the vehicle, the rod diameters can be small as the push out force from the cylinders can be low. Similarly the operating pressure of the hydraulic systems can be low, although it is generally set high enough to avoid cavitation in normal driving conditions at any point in the system.

Each of the four fluid volumes additionally includes a respective connecting conduit 77, 78, 79 and 80 to provide fluid communication between a fluid volume and a longitudinal flow control means 100,101. The longitudinal flow control means may damp and/or selectively open or block the fluid communication between associated connecting conduits.

The left longitudinal flow control means 100 controls the flow between the front left fluid volume connecting conduit 77 and rear left fluid volume connecting conduit 80. Similarly, the right longitudinal flow control means 101 controls the flow between the front right fluid volume connecting conduit 78 and rear right fluid volume connecting conduit 79. The use of the terms left and right longitudinal flow control means should not be taken to infer any limitation in the position or orientation of the actual devices on the vehicle, it merely describes the function of each device, which is to connect the front and rear wheel rams on one side of the vehicle.

As described above, each fluid volume in the hydraulic system includes a compression conduit, a rebound conduit, a connecting conduit and an accumulator.

It should be readily appreciated that any layout of the fluid conduits which provide an equivalent connectivity could be used. For example, the front left connecting conduit 77 may be omitted and the front left compression conduit 61 and the front right rebound conduit 66 may both be directly and individually connected to the left longitudinal flow control means 100. The purpose of the left longitudinal flow control means is to control the flow between the front left fluid volume and the rear left fluid volume. Similarly the purpose of the right longitudinal flow control means is to control the flow between the front right fluid volume and the rear right fluid volume.

The longitudinal flow control means, 100 and 101, may be for example a fixed or variable restriction or lock out valve. The longitudinal flow control means may include a restriction and a lockout valve. If the restriction provides minimal pressure drop, or if the lock out valve is open i.e. there is free fluid communication between the front left fluid and rear left fluid volumes and between the front right and rear right fluid volumes, then the fluid displacement in different modes can be described as follows:
a) in roll, when the vehicle is cornering to the right, centrifugal forces act on the body towards the left and the vehicle body rolls to the left, displacing fluid out of both the front left compression chamber and the front right rebound chamber into the front left accumulator 69 and out of the rear left compression chamber and rear right rebound chamber into the rear left accumulator 72. There is also an ingress of fluid into the front right compression chamber and the front left rebound chamber, supplied by the front right accumulator 70 and into the rear right compression chamber and the rear left rebound chamber, supplied by the rear right accumulator 71. If the RMD of the hydraulic system is the same whether the longitudinal flow control means are open or closed, then during this roll motion, negligible fluid volume flows through the front left fluid volume connecting conduit, rear left fluid volume connecting conduit and hence through the left longitudinal flow control means, because the left front and rear volume pressures are substantially balanced. Similarly, negligible flow would occur for the right fluid volumes and hence through the right longitudinal flow control means. However, if the RMD of the hydraulic system is different with the longitudinal flow control means open compared to when they are closed, then fluid will flow through the longitudinal flow control means to maintain a front to rear pressure balance.
   When there is front to rear fluid communication, the RMD of the hydraulic system will be determined solely by the wheel ram sizes and location (ie the left fluid volume pressures are similar front to rear and the right fluid volume pressures are similar front to rear, so the action of the left and right fluid volume pressures on the front and rear wheel ram pistons and the mechanical advantage of the front and rear wheel rams determine the distribution of roll force front to rear).
b) in warp, when the front left and rear right wheels are on higher ground than the front right and rear left wheels, the excess fluid in the front left and rear right fluid volumes flows through the front left and rear right fluid volume connecting circuits 77 and 79, moving fluid into the front right and rear left fluid volumes where the drooping of the wheels has created a demand for more fluid. In pure warp the flow through each longitudinal flow control means 100, 101 should be higher than any other mode. Therefore providing damping in the longitudinal flow control means affects roll more than other modes. Warp mode damping can best be controlled in the way using known damping types. As long as the roll moment distribution of the hydraulic system front to rear is matched to the wheel travel in the warp mode rear to front, then the pressures in the four (two pairs of interconnected) fluid volumes should not change.
c) in pitch, the difference between the fluid displaced into or out of the compression chamber of one wheel ram and the fluid displaced out of or into the rebound chamber of the laterally adjacent wheel ram is equal to the rod volume displaced in the motion. This rod volume is all that is displaced into or out of the accumulators in pitch motions. In pure pitch motions, the rod volume may flow through the left and right longitudinal flow control means 100,101 with no resistance, with each longitudinal flow control means providing little or no effect in this mode.
d) in heave, the difference between the fluid displaced into or out of the compression chamber of one wheel ram and the fluid displaced out of or into the rebound chamber of the laterally adjacent wheel ram is equal to the rod volume displaced in the motion. This rod volume is all that is displaced into or out of the accumulators in heave motions. In pure heave motions the forces over the left and right longitudinal flow control means (100,101) remain balanced, with each longitudinal flow control means providing little or no affect in this mode.

Therefore the hydraulic system provides roll stiffness and may selectively provide warp stiffness and appropriate RMD using the longitudinal flow control means.

A further option available for tuning the RMD of the hydraulic system whilst still providing the desired overall vehicle RMD is to use support means with different degrees of roll stiffness as described above. For example, to enable a vehicle with a forwards biased vehicle RMD of 65% to use more even size wheel ram components and generate a similar peak damping pressure in the front and rear wheel ram chambers, the RMD of the vehicle support means can be chosen to give an acceptable hydraulic system RMD. It may be desirable to set the support means RMD to be the same as the required overall vehicle RMD of 65%, in which case, the front support means may be independent coil springs and the rear support means may be a combination of independent coil springs and laterally connected torsion bars.

If, due to the RMD of the hydraulic system, the front fluid volume connecting conduits need to be a much different size to the rear fluid volume connecting conduits for acceptable fluid velocity and acceleration effects, then it can be advantageous to position the longitudinal flow control means towards one end of the vehicle. ie if the rear cylinder bore is small diameter, the roll damping force acting on the rear wheels due to the accumulator dampers can be sensitive to compliance of the conduits and fluid. Locating the valves close to the lateral rear conduits reduces the length of conduit and volume of fluid in the rear fluid volumes increasing the benefit of the accumulator dampers in this case.

The four fluid connecting conduits 77-80 are connected via passages 120-125 to a pressure maintenance device 126. To control the transfer of fluid between the individual conduits and between the conduits and the pressure maintenance device, fluid transfer control devices are required, preferably located in passages 120-123. In its simplest form, each fluid transfer control device is a restriction, typically a micro orifice with filters either side to prevent blockage, although any known restrictive means may be used such as a capillary line or a porous block of material. If orifices are used, they are generally sized to provide the characteristics required to maintain the pressures in the four fluid volumes within an acceptable range whilst preventing significant fluid flow during cornering to maintain the static roll moment distribution and stiffness and to maintain the roll attitude within an acceptable range when returning to straight line running. Alternatively, the fluid transfer control devices 120-123 may be valves to selectively communicate the fluid volumes with the pressure maintenance device. The valves can be solenoid actuated valves for example, electrically controlled in dependence on any combination of vehicle condition signals such as vehicle speed, steering angle, steering rate, lateral acceleration, one or more pressures in the hydraulic system, ambient temperature or the temperature of one or more components of the vehicle or the hydraulic system.

Although the pressure maintenance device 126 may be omitted, changes in the volumes of fluid and gas in the hydraulic system and its accumulators through the operating temperature range of the vehicle are usually large enough to require some form of compensation device. The complexity of this device can vary significantly, depending on the design parameters and the functionality required.

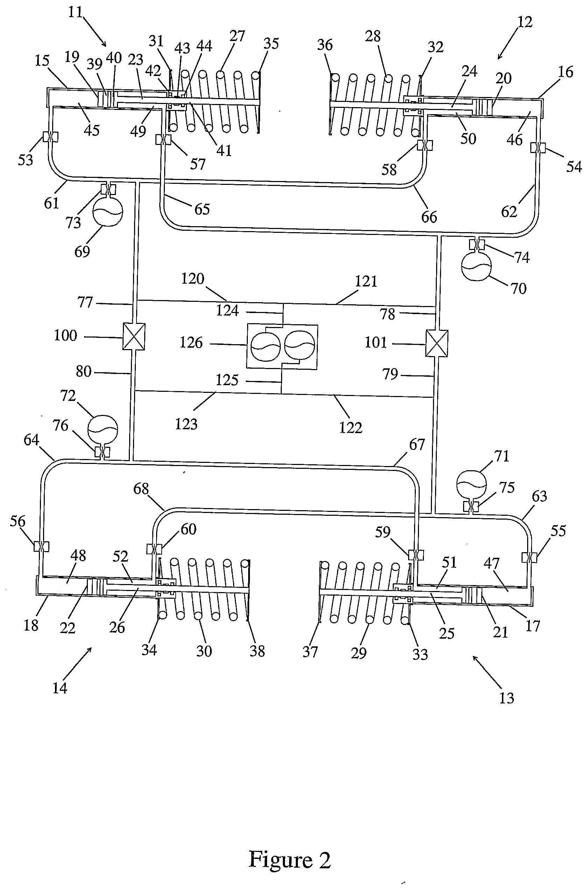

In its simplest form, the pressure maintenance device 126 can be a fluid pressure accumulator with any known construction (for example bladder-type with gas spring, piston-type with gas spring or with mechanical spring), as seen in figure 2.

Alternatively the pressure maintenance device 126 can use a fluid pressure source (such as a tank with a pump, or another vehicle system such as the power steering) to maintain the pressure in the hydraulic suspension volumes to either a fixed or a variable pressure. If a fixed pressure is chosen, the components required can be simple, cheap, passive, mechanical parts, however as the system temperature changes, the system stiffness will change slightly. To maintain the system stiffness characteristics constant with varying temperature, the pressure in the systems must be adjusted in dependence on their temperature, which generally requires one or more temperature sensors, at least one variable pressure switch or pressure transducer and an electronic control unit.

Also, the roll stiffness of the hydraulic suspension system can be adjusted by changing the pressure in the systems, so if a pressure maintenance device 126 with variable pressure set-points is used, the pressure can be varied in dependence on the load in the vehicle and/or by a driver operated mode selector or a variable selector. For rapid adjustment of the pressure in the systems, valves are preferable to restrictions alone between the pressure maintenance device and the four fluid volumes.

One alternative is for the pressure maintenance device to regulate to two different pressures. This could be done by using valves to control the pressure in the four fluid volumes in pairs. Alternatively the pressure maintenance device could be connected to two of the fluid volumes (for example the front left and front right fluid volumes) and the longitudinal flow control means then used to bridge across between each pressure regulated volume and another fluid volume. In a further alternative option, the pressure maintenance device may include two accumulators, each connected to two fluid volumes through passages incorporating fluid transfer control devices as described in relation to Figure 2. Regulating different pairs of fluid volumes gives control of different parameters. For example, if the longitudinal flow control valves are blocking fluid flow between front and rear, then the front fluid volumes can be regulated to a different pressure to the rear fluid volumes giving a different RMD of the system compared to the case where, using the same system component sizing, all four volumes are regulated to the same pressure. Alternatively, if the two left fluid volumes are regulated to different pressure to the two right fluid volumes, then the hydraulic system can be used to react a roll moment on the vehicle, for example a static roll load due to an offset payload in the vehicle.

Alternatively, or additionally, the pressure in the four hydraulic volumes may be controlled at a higher frequency in dependence on steering and handling measures to actively control roll attitude and/or RMD. The components (pump, tank, valves, sensors and controllers for many different algorithms) are all well known.

If the longitudinal flow control means 100 and 101 include lockout valves, as in Figure 2, then these lockout valves may be operated to switch the RMD of the system between the two settings (one determined by the wheel rams and the resilience in the individual front and rear fluid volumes, the other determined solely by the wheel rams). This may be done in response to sensed vehicle handling inputs, for example switching to a more forward biased RMD of the hydraulic system to encourage understeer, in which case the RMD of both settings can be determined by vehicle handling balance factors. Alternatively, one setting can be used to provide the desired handling balance of the vehicle (which typically results in a forward biased RMD of the hydraulic system) and the other setting can be used to provide a more even RMD for the vehicle to give reduced head toss and improved comfort for a given roll stiffness. Then the lockout valves can be controlled either automatically using sensed inputs (including vehicle speed, lateral acceleration, steering angle and/or steering rate) to determine if the vehicle is travelling in a straight line or cornering, providing increased comfort over undulating surfaces in a straight line and providing the desired handling balance when cornering. Sensing devices may be used to predict or estimate the roughness of the terrain and may include continual wheel travel analysis (probably averaged, for example RMS, over a period of time), GPS and/or other position/road sensing devices. The lockout valves may alternatively be manually or automatically controlled for on-road or off-road use as off-road comfort (during large warp inputs) significantly benefits from a RMD which is reasonably balanced front to rear. For example, an automatic control could be used to detect the roughness of the terrain and input this into a control algorithm including vehicle speed, steering and/or other inputs to determine the most appropriate state of the lockout valves.

Alternatively or additionally, the lockout valves may be used to isolate the front and rear arrangements and form four volumes in the event of a system failure. In this case, it is preferred that the pressure maintenance system is arranged to maintain the pressure in individual or pairs of fluid volumes such that the hydraulic system can still provide a roll stiffness to limp the vehicle home. Alternatively or additionally, a failsafe mode could be employed to isolate a pressure loss and divert flow through a series of lockout valves and conduits to maintain pressure and damping at each cylinder. Failure may be detected using any known means (ie if a loss of fluid pressure is detected in one of the fluid volumes, or if the fluid pressure does not match a mapped fluid pressure for the dynamic conditions on the vehicle due to a system malfunction or component failure).

Additionally or alternatively, as mentioned above, if some form of active pressure control is available, it may be desirable to control the front and rear pressures independently, to thereby influence the roll moment distribution of the hydraulic system and therefore the dynamic behaviour of the vehicle.

The valves can also be used when the dynamic conditions on a vehicle or a combination of for example lateral acceleration and throttle or brake position are used to indicate that wheel lift is likely to occur, in which case, the lockout valves can be closed to increase the stability of the vehicle.

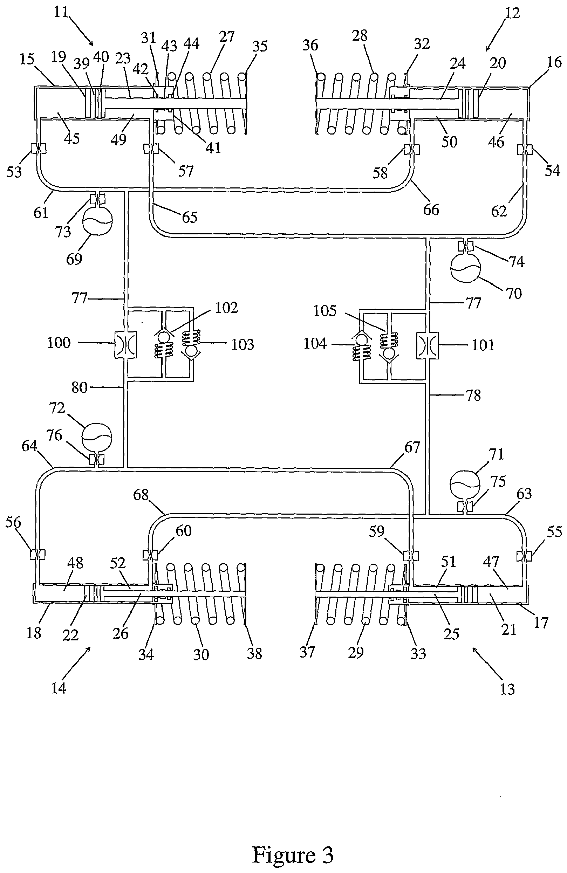

Figure 3 shows the use of restrictions (100, 101) as the longitudinal flow control means with optional bypass valves (102,103,104,105), these restrictions can be dynamically variable, actively controlled and/or switchable between several restrictions. The restrictions may be varied in dependence of vehicle speed, moving the vehicle's steering balance from desired high speed understeer to low speed oversteer. If the longitudinal flow control means include damping, then the (dynamic) front to rear balance of roll damping can be towards the RMD of the hydraulic system if the conduits 77,78,79 and 80 were completely blocked and the (steady state) front to rear balance of roll stiffness of the hydraulic system is as if the conduits were completely open. This can be an especially useful tool for fine tuning the front to rear balance of roll damping for the vehicle, which may need to be different to the RMD of the hydraulic system.

Although the longitudinal flow control means (100, 101) are shown midway down the longitudinal conduits it may be possible to connect the longitudinal flow control means anywhere along the fluid volume connecting conduits (77, 78, 79, 80) or even at the connection to the compression or rebound conduits. Alternatively or additionally, the left and right longitudinal flow control means may be operated by a single actuator or switch to simultaneously close, open and/or damp both conduits at any point along both the fluid volume connecting conduits.

Additionally or alternatively, it may be desirable if the pitch damping for one end of the vehicle could be increased or decreased relative to the other. By increasing the rod size at one end of the vehicle, unless the accumulator stiffness front to rear is matched to the rod displacement front to rear in heave, then fluid must flow through the restriction of the longitudinal flow control means, therefore providing greater pitch damping for that end of the vehicle. Alternatively, the rod diameters may be increased in the front and rear wheel rams to reduce the difference between the heave and roll damping forces. Then the front and rear accumulators could be deliberately mismatched for a further alternative method of generating significant longitudinal flow in pitch to increase the effect of the longitudinal flow control means damping on the pitch damping for the vehicle. By using different levels of damping in each direction of flow through the longitudinal flow control means, different pitch, warp and/or roll damping may be achieved, for example acceleration and braking damping could be tuned separately.

Additionally or alternatively, it may be desirable, if the roll damping for one end of the vehicle could be increased or decreased relative to the other. By altering the bore size of one end of the vehicle a flow through the restriction (100, 101) may be achieved, therefore providing greater roll damping for that end of the vehicle, but this also changes the RMD of the hydraulic system. A preferred method of tuning the front to rear roll damping is to use accumulator stiffness mismatched front to rear to the RMD to generate flow though the restrictions (100, 101) which can then be used to fine tune the front to rear distribution of roll damping forces.

Also by adding this restriction on the longitudinal lines the system may permit the advantages of switchable dampers (73, 74, 76, and 75) on the accumulators to be realised. If fluid flows at different rates into the two accumulators on one side of the vehicle, a resonance can then be induced between the accumulators. This problem is especially prevalent when the damping for only one of the accumulators is switched, causing the different flow rates into the two accumulators. In this case, damping the flow between the two accumulators on one side of the vehicle using the longitudinal flow control means permits damping of the resonance. In a similar manner any resonances between two accumulators at any frequency could be damped to remove this unsettling, ride compromising phenomenon.

Using damping in the longitudinal flow control means can also provide damping of warp motions. This can be beneficial to remove any warp resonances in the system (ie front and rear wheels using the compliance of the tyres and wheel ram mounts to oscillate in the warp mode). As this warp resonance can be in the frequency range of wheel hop, the wheel dampers can be used to damp this warp resonance also, but use of the longitudinal flow control means may permit a more optimised damping solution.

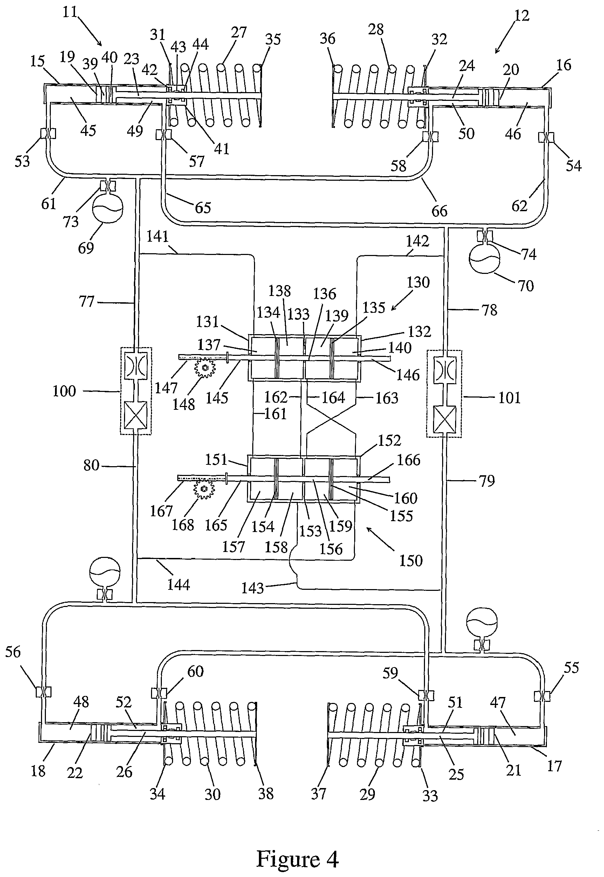

The pressure maintenance for a system which, in normal operation, uses only damping (not complete blocking of flow) through the longitudinal flow control means may use only two channels to maintain the pressure because there is essentially only two fluid volumes. Lockout valves may still be provided in the longitudinal flow control means in this situation (as shown in Figure 4) for use as a failsafe for example.

Figure 4 shows an alternative form of active control for the hydraulic system of the present invention. Two fluid displacement devices 130 and 150 are shown to effect controlled displacement of fluid between the four fluid volumes.

The first fluid displacement device comprises two primary chambers 131 and 132, separated by a fixed wall 133. Each primary chamber is divided into two secondary chambers (137 and 138, 139 and 140) by a respective piston 134, 135 fixed to either end of a central rod 136 which passes through the fixed wall 133. Control conduits connect the secondary chambers of the first fluid displacement device to the four fluid volume connecting conduits such that motion of the pistons 134, 135 and central rod 136 displace into the fluid volumes on one side of the vehicle and out of the fluid volumes on the opposite side of the vehicle to adjust the roll attitude of the vehicle.

In Figure 4, the four secondary chambers of the first fluid displacement device are connected to the four fluid volumes of the hydraulic system, two of the secondary chambers being directly connected to the front fluid volumes by control conduits 141 and 142. The other two secondary chambers of the first fluid displacement device are connected to the rear fluid volumes through control conduits 143 and 144 via the second fluid displacement device to simplify the drawing. However, as is readily apparent each secondary chamber of each device may be connected to any point in its associated fluid volume maintaining the same effective fluid connectivity.

Since the first fluid displacement device can be used to control the roll attitude of the vehicle, it can be called a roll attitude fluid displacement device. The secondary chambers therein can be called roll attitude control chambers. Then in the connection sequence shown in Figure 4, the front left roll attitude control chamber 137 is connected to the front left fluid volume connecting conduit 77, the rear right roll attitude control chamber 138 is connected to the rear right fluid connecting conduit 79 (via the second fluid displacement device), the rear left roll attitude control chamber 139 chamber is connected to the rear left fluid volume connecting conduit 80 (via the second fluid displacement device) and the front right roll attitude control chamber 140 is connected to the front right fluid volume connecting conduit 78.

A control rod 145 is fixed to the opposite side of the first piston 134, passing through secondary chamber 137. A matching dummy rod 146 is connected to the opposite side of the second piston 135 passing through secondary chamber 140. The control rod 145 includes a toothed portion or rack 147 enabling the position of the piston rod assembly of the roll attitude fluid displacement device to be controlled by driving the rotation of the gear wheel or pinion 148. The position of the piston rod assembly may be driven by any other known arrangement (for example additional hydraulic chambers into which the control rod and the dummy rod protrude, the volume of fluid in the hydraulic chambers being controlled).

It should be readily appreciated that the connection sequence between the roll attitude fluid displacement device and the four fluid volumes of the hydraulic system can be changed whilst achieving the same functionality. This can be used to permit different relative displacements front and rear if required, using either a different diameter central rod 136, or if chambers 138 and 140 are swapped for example (so that 138 is now the front right roll attitude control chamber and 140 is now the rear right roll attitude control chamber) by changing the diameter of one of the primary chambers 131 or 132. It can be desirable in many applications to transfer a different amount of fluid between the two front fluid volumes compared to between the two rear fluid volumes.

Although it is generally preferable to match the effective piston area of the two front roll attitude control chambers to each other, and to match the effective piston area of the two rear roll attitude control chambers to each other, it is obviously possible to use different effective areas (to put a "wedge" in the wheel loads for example).

The second fluid displacement device comprises two primary chambers 151 and 152, separated by a fixed wall 153. Each primary chamber is divided into two secondary chambers (157 and 158, 159 and 160) by a respective piston 154, 155 fixed to either end of a central rod 156 which passes through the fixed wall 153. Control conduits connect the secondary chambers of the second fluid displacement device to the four fluid connecting conduits such that motion of the pistons 154, 155 and central rod 156 displace into the fluid volumes at one end of the vehicle and out of the fluid volumes at the opposite end of the vehicle to adjust the roll moment distribution of the vehicle by increasing the pressure in the fluid volumes at one end of the vehicle and reducing the pressure in the fluid volumes at the opposite end of the vehicle. As discussed above, in Figure 4, two of the control conduits connecting the secondary chambers of the second fluid displacement device 150 to the fluid volumes of the hydraulic system are shown directly connecting the secondary chambers of the second fluid displacement device to the rear fluid volumes and the other two the secondary chambers of the second fluid displacement device are connected to the front fluid volumes of the hydraulic system via two of the secondary chambers of the first fluid displacement device.

Since the second fluid displacement device can be used to control the roll moment distribution of the hydraulic system, it can be called a roll moment distribution fluid displacement device. The secondary chambers therein can be called roll moment distribution control chambers. Then in the connection sequence shown in Figure 4, the front left roll moment distribution control chamber 157 is connected to the front left fluid volume via the front left roll attitude control chamber 137, the rear right roll moment distribution control chamber 158 is connected to the rear right fluid volume (and the rear right attitude control chamber 138), the rear right roll moment distribution control chamber 159 chamber is connected to the front right fluid volume via the front right roll attitude control chamber 140 and the rear left roll attitude control chamber 160 is connected to the rear left fluid volume (and the rear left roll attitude control chamber 139).

A control rod 165 is fixed to the opposite side of the first piston 154, passing through secondary chamber 157. A matching dummy rod 166 is connected to the opposite side of the second piston 155 passing through secondary chamber 160. The control rod 165 includes a toothed portion or rack 167 enabling the position of the piston rod assembly of the roll moment distribution fluid displacement device to be controlled by driving the rotation of the gear wheel or pinion 168. The position of the piston rod assembly may be driven by any other known arrangement.

It should be readily appreciated that the connection sequence between the roll moment distribution fluid displacement device and the four fluid volumes of the hydraulic system can be changed whilst achieving the same functionality.

It can be desirable to produce different relative fluid volume displacements front and rear. For example, to reduce oversteer a larger volume of fluid may be required to be displaced into the front fluid volumes than out of the rear fluid volumes. Indeed if the fluid volumes transferred (out of the fluid volumes at one end of the vehicle and into the fluid volumes at the other end of the vehicle) do not match the other system stiffness settings, then the roll stiffness can be affected (which may be done deliberately to positive effect). Additionally it is possible to increase and decrease the pressure in the two fluid volumes at one end of the vehicle only (ie provide a roll moment distribution fluid displacement device with only two control chambers which vary in volume in the same direction as each other for controlling the pressures in for example the rear fluid volumes). This will change the roll stiffness in addition to changing the RMD which can be desirable as noted in the applicant's International Patent Application WO/2003/029036 and can be controlled actively at a relatively high frequency as with the two illustrated fluid displacement devices, or even at lower frequency in dependence on load and/or load position.

Again, although it is generally preferable to match the effective piston area of the two front roll moment distribution control chambers to each other, and to match the effective piston area of the two rear roll moment distribution control chambers to each other, it is obviously possible to use different effective areas.

One arrangement that allows easy sizing of different effective areas is to remove the dummy rod 146, 166 from either fluid displacement means 130 or 150 (advantageously negating the need for an associated rod seal out of the end of the primary chamber 132 or 152), then use a control rod (145 or 165) of larger diameter than the central rod (136 or 156) and use a larger diameter for the primary chamber (131 or 151) including the control rod (145 or 165) than for the other primary chamber (132 or 152). In this way, it is possible to size the control and central rods and the two primary chambers of a device to match pairs the effective area of pairs of chambers as previously discussed. Indeed this arrangement is preferred for construction of each fluid displacement device, the equal component size embodiments shown in the figures being used for more ready understanding of the concepts.

It should be noted that while two fluid displacement devices are shown in the figure, further variations are possible. For example, only one fluid displacement means may be provided to control roll attitude without additional control of RMD.

A pressure maintenance device of any type (as described above) may be used with this arrangement to maintain or control the average static operating pressure in each fluid volume. One advantage of utilising fluid displacement devices to provide active control of the roll attitude and/or RMD is that the pressure maintenance device may be of its most simple passive form of one accumulator connected to the four fluid volumes through respective passages incorporating fluid transfer control devices.

Many other obvious alterations to the basic arrangement of the components whilst maintaining the connection sequence essential for the functionality of the hydraulic system are considered to fall within the scope of this application. For example, it is obvious that, in a production design of the system, it is possible to incorporate not only the wheel damper valves (53-60) into the main body of the wheel ram, but also the accumulators and the accumulator damper valves. For example, the front left wheel ram may include the wheel damper valves 53 and 57, the accumulator 69 and the accumulator damping 73.

The wheel damper valves may be located further away from the chambers of the wheel rams and may even be located in a manifold which provides the accumulator damper valves, the accumulator and even the junctions between the compression, rebound and connecting conduits. Similarly, the accumulators may be located away from the wheel rams, the front accumulators being located in the engine bay for example, or at any other point in the associated fluid volume even on the connecting conduits or integrated into the central device or simply under the body of the vehicle for improved packaging and cooling.

As already discussed it can be desirable to change the roll stiffness of the hydraulic system, however there are many simple known methods to achieve this rather then the pressure control discussed above. For example, to permit switching of the roll stiffness of the hydraulic system additional accumulators may be provided in the front or rear fluid volumes or in all four fluid volumes. A lockout valve may be provided for each additional accumulator, the lockout valve being manually controlled, or automatically controlled using inputs such as vehicle speed, lateral acceleration, fluid pressures, steering angle and/or steering rate. The additional accumulators may or may not be damped.

An alternative to hydraulically switching a whole accumulator in and out of communication with the fluid volumes, is to use an accumulator design with two gas volumes, then simpler, smaller, cheaper gas switching valves can be used to vary the gas volumes available to the systems by switching the lock-out valve between the two gas volumes to isolate one of the volumes.

A further alternative method to switch the roll stiffness is to employ 'bridging valves' which connect at least two (i.e. the front left and front right and/or rear left and rear right) fluid volumes together. This method can be employed more cheaply (only the bridging valves are required), but it can remove all roll stiffness and the roll damping effect of the accumulator damper valves from the hydraulic system. Generally, it is cheapest to connect the bridging valves between the conduits of the front fluid volumes and/or the conduits of the rear fluid volumes. A further alternative is to design a controlled switchable or variable bypass valve into the piston between the compression and rebound chamber of each wheel ram. As this effectively short-circuits the system, it reduces fluid flow through the system greatly and can give the best comfort performance given the low fluid accelerations. Ideally the control is electronic, sensing steering angle and/or steering velocity, vehicle speed and lateral acceleration.

Throughout all of the preceding drawings, the accumulator damper valves, or indeed any damper valve positioned in the hydraulic system, may be passive or controlled, the control being of any known form, from a simple switched damper valve to a completely continuously variable damper valve. The simple switched damper valve may be of any known type such as a switchable bypass around each roll damper valve or a simple controlled bleed orifice.

Indeed at every point where there is a damper indicated in the figures, that damper valve can be either: a single damper valve having the same characteristics in both directions; a single valve having different characteristics from one direction of fluid flow to the other; a single valve having flow restriction characteristics in one direction and being relatively free-flowing in the opposite direction; two single-acting valves, one damper valve to control the restriction to flow in one direction and a second damper valve to control the restriction to flow in the opposite direction, the two valves being used in parallel, or in series with a non-return valve in parallel with each valve as is known in conventional damper valve technology.

It can be preferable to use two accumulator damper valves between each accumulator and the system, one acting in the opposite direction to the other and optionally offering different restriction characteristics. If the flow into the accumulators is less restricted by an accumulator compression damper valve compared to the restriction of flow out of the accumulator provided by an accumulator rebound damper valve, the vehicle height can be temporarily reduced as the vehicle rolls and the position of the dynamic roll axis of the suspension can be adjusted. It should however be noted that it is also possible to use only one accumulator damper valve either providing bi-directional restriction or providing damping in one direction only. For example, if accumulator rebound direction damping only is provided (or if the accumulator compression direction damper valve is omitted) then again the vehicle height will temporarily reduced as the vehicle rolls.

If additional load support and/or very little roll stiffness is required from the hydraulic system at one end of the vehicle, the wheel rams may be single-acting rams. The single acting rams may include a compression and a rebound chamber with the piston of the wheel ram being a damper valve to provide rebound and optionally some compression damping for associated wheels. An example of this can be found in the applicant's International Patent Application WO/2002/055327.

Wheels may be any form of surface engaging means such as skis, tracks, floats for engaging any commonly traversed surface such as railway or tram tracks, tarmac or other road or pavement, mud, sand, water, snow or ice.

## Claims

1. A suspension system for a vehicle, the vehicle including a vehicle body and at least two forward and two rearward wheel assemblies, the suspension system including a hydraulic system, the hydraulic system including:
at least one front left (11), at least one front right (12), at least one rear left (14) and at least one rear right (13) wheel ram respectively located between the wheel assemblies and the vehicle body, each wheel ram including at least a compression chamber (45, 46, 48, 47);
the compression chamber of each wheel ram being in fluid communication with a respective compression conduit (61, 62, 64, 63) forming a front left fluid volume (45, 61), a front right fluid volume (46, 62), a rear left fluid volume (48, 64) and a rear right fluid volume (47, 63);
the hydraulic system further including a first flow control means (100) and a second flow control means (101);
the front left and rear left fluid volumes being in fluid communication with the first flow control means, the first flow control means controlling the fluid communication between the front left and rear left fluid volumes; and
the front right and rear right fluid volumes being in fluid communication with the second flow control means, the second flow control means controlling the fluid communication between the front right and rear right fluid volumes,
such that roll motions of the vehicle are resisted by the hydraulic system and when fluid is permitted to flow through the first and second flow control means warp motions of the wheels relative to the vehicle body are permitted by the hydraulic system; and
a compression chamber damper valve (53, 54, 56, 55) between the compression chamber of each wheel ram and the respective compression conduit;
the suspension system being **characterised by** at least two of the wheel rams at one end of the vehicle further including a rebound chamber (49, 50, 52, 51), each rebound chamber being in fluid communication with the compression chamber of the laterally adjacent wheel ram (49, 12; 50, 11; 51, 14; 52, 13);
and by each rebound chamber including a rebound chamber damper valve (57, 58, 60, 59) in direct fluid communication with the compression chamber damper valve of the compression chamber of a laterally adjacent wheel ram.

2. A suspension system as claimed in claim 1, the suspension system further including front and rear resilient vehicle support means (27, 28, 30, 29) between the vehicle body and the wheel assemblies for resiliently supporting the vehicle above the wheel assemblies.

3. A suspension system as claimed in claim 1 wherein the first and/or second flow control means includes a damping means.

4. A suspension system as claimed in claim 1 wherein the first and/or second flow control means includes a lockout valve.

5. A suspension system as claimed in any one of the preceding claims wherein each front wheel ram (11, 12) includes a said rebound chamber (49, 50), the compression chamber (45, 46) of each front wheel ram being in direct fluid communication with the rebound chamber of the respective laterally adjacent wheel ram.

6. A suspension system as claimed in any one of the preceding claims wherein each rear wheel ram (14, 13) includes a said rebound chamber (52, 51), the compression chamber (48, 47) of each rear wheel ram being in direct fluid communication with the rebound chamber of the respective laterally adjacent wheel ram.

7. A suspension system as claimed in any one of claims 1 to 4 wherein each front wheel ram includes a rebound chamber and each rear wheel ram includes a rebound chamber, the compression chamber of each wheel ram being in direct fluid communication with the rebound chamber of the laterally adjacent wheel ram.

8. A suspension system as claimed in claim 1 wherein the vehicle body is primarily supported by a resilient vehicle support means.

9. A suspension system as claimed in claim 2 wherein the vehicle support means for at least one end of the vehicle includes first support means for providing support for at least a portion of the load on the vehicle, the first support means providing a roll stiffness.

10. A suspension system as claimed in claim 2 wherein the vehicle support means for at least one end of the vehicle includes second support means for providing support for at least a portion of the load on the vehicle, the second support means providing substantially zero roll stiffness.

11. A suspension system as claimed in claim 1 wherein at least one fluid pressure accumulator (69, 70, 72, 71) is provided for one or more of the front left, front right, rear left and/or rear right fluid volumes, each accumulator being in fluid communication with the respective fluid volume.

12. A suspension system as claimed in claim 11 further including damping means (73, 74, 76, 75) for damping the flow of fluid into and/or out of at least one of the accumulators.

13. A suspension system as claimed in claim 1 further including a pressure maintenance device (126) connected to at least two of the fluid volumes through respective restrictions or valves.

14. A suspension system as claimed in claim 13 wherein the pressure maintenance device is a simple accumulator connected through a restriction to one or more of the fluid volumes.

15. A suspension system as claimed in claim 13 wherein the pressure maintenance device includes a pump, tank and fluid transfer control devices to control the pressures in the left and right fluid volumes and/or the front and rear fluid volumes.

16. A suspension system as claimed in claim 15 wherein the pressures are controlled to be different in the left fluid volumes to the right fluid volumes to provide roll attitude control, either at low frequency, or actively at higher frequency.

17. A suspension system as claimed in claim 15 wherein the pressures are controlled to be different in the front fluid volumes to the rear fluid volumes to provide roll moment distribution control, either at low frequency, or actively at higher frequency.

18. A suspension system as claimed in claim 4 wherein the lockout valve is controlled manually or automatically to switch between permitting fluid communication and preventing fluid communication.

19. A suspension system as claimed in claim 4 or 18 wherein the lockout valve is controlled to switch between an on-road setting with warp stiffness or an off-road setting without warp stiffness, but maintaining a roll stiffness.

20. A suspension system as claimed in claim 4 or 18 wherein the lockout valve is controlled to switch between two different settings of roll moment distribution of the hydraulic system.

21. A suspension system as claimed in claim 4, wherein the lockout valve permits fluid communication in normal operation and is controlled to close to prevent wheel lift or in the event of a failure in the hydraulic system.

22. A suspension system as claimed in claim 1 wherein the first flow control means is a left longitudinal flow control means, and the second flow control means is a right longitudinal flow control means, each longitudinal flow control means including a damper means, the damper means being a passive restriction or passive multi-stage damper valve.

23. A suspension system as claimed in claim 1 wherein the first flow control means is a left longitudinal flow control means, and the second flow control means is a right longitudinal flow control means, each longitudinal flow control means including a damper means, the damper means being controlled to provide a variable restriction in dependence on sensed vehicle operation or events.

24. A suspension system as claimed in claim 1 further including at least one valve to selectively interconnect the front fluid volumes and/or at least one valve to selectively interconnect the rear fluid volumes for removing the roll stiffness of the hydraulic system.

## Patentansprüche

1. Aufhängungssystem für ein Fahrzeug, wobei das Fahrzeug einen Fahrzeugkörper und mindestens zwei vordere und zwei hintere Radgruppen enthält, wobei das Aufhängungssystem ein Hydrauliksystem enthält, wobei das Hydrauliksystem Folgendes enthält:
mindestens einen Radzylinder vorne links (11), mindestens einen Radzylinder vorne rechts (12), mindestens einen Radzylinder hinten links (14) und mindestens einen Radzylinder hinten rechts (13), jeweils zwischen der Radgruppe und dem Fahrzeugkörper angeordnet, wobei jeder Radzylinder mindestens eine Kompressionskammer (45, 46, 48, 47) enthält;
wobei sich die Kompressionskammer jedes Radzylinders in Fluidkommunikation mit einer jeweiligen Kompressionsleitung (61, 62, 64, 63) befindet, die ein vorderes linkes Fluidvolumen (45, 61), ein vorderes rechtes Fluidvolumen (46, 62), ein hinteres linkes Fluidvolumen (48, 64) und ein hinteres rechtes Fluidvolumen (47, 63) bildet;
wobei das Hydrauliksystem ferner erste Strömungssteuermittel (100) und zweite Strömungssteuermittel (101) enthält;
wobei sich die vorderen linken und rechten Fluidvolumen in Fluidkommunikation mit dem ersten Strömungssteuermittel befinden, wobei das erste Strömungssteuermittel die Fluidkommunikation zwischen den vorderen linken und hinteren linken Fluidvolumen steuert; und wobei sich die vorderen rechten und hinteren rechten Fluidvolumen in Fluidkommunikation mit dem zweiten Strömungssteuermittel befinden, wobei das zweite Strömungssteuermittel die Fluidkommunikation zwischen den vorderen rechten und hinteren rechten Fluidvolumen steuert, so dass Rollbewegungen des Fahrzeugs durch das Hydrauliksystem abgefangen werden und, wenn das Durchströmen des ersten und zweiten Steuermittels durch Fluid zugelassen wird, Neigungsbewegungen der Räder bezüglich des Fahrzeugkörpers durch das Hydrauliksystem zugelassen werden; und ein Kompressionskammerdämpfventil (53, 54, 56, 55) zwischen der Kompressionskammer jedes Radzylinders und der jeweiligen Kompressionsleitung;
wobei das Aufhängungssystem **dadurch gekennzeichnet ist, dass** mindestens zwei der Radzylinder an einem Ende des Fahrzeugs eine Rückprallkammer (49, 50, 52, 51) enthalten, wobei sich jede Rückprallkammer in Fluidkommunikation mit der Kompressionskammer des lateral angrenzenden Radzylinders (49, 12; 50, 11; 51, 14; 52, 13) befindet;
und dass jede Rückprallkammer ein Rückprallkammerdämpfventil (57, 58, 60, 59) in direkter Fluidkommunikation mit dem Kompressionskammerdämpfventil der Kompressionskammer eines lateral angrenzenden Radzylinders enthält.

2. Aufhängungssystem nach Anspruch 1, wobei das Aufhängungssystem ferner vordere und hintere elastische Fahrzeugstützmittel (27, 28, 30, 29) zwischen dem Fahrzeugkörper und den Radgruppen zum elastischen Stützen des Fahrzeugs oberhalb der Radgruppen enthält.

3. Aufhängungssystem nach Anspruch 1, wobei das erste und/oder zweite Strömungssteuermittel ein Dämpfmittel enthält.

4. Aufhängungssystem nach Anspruch 1, wobei das erste und/oder zweite Strömungssteuermittel ein Sperrventil enthält.

5. Aufhängungssystem nach einem der vorstehenden Ansprüche, wobei jeder vordere Radzylinder (11, 12) die Rückprallkammer (49, 50) enthält, wobei sich die Kompressionskammer (45, 46) jedes vorderen Radzylinders in direkter Fluidkommunikation mit der Rückprallkammer des jeweiligen lateral angrenzenden Radzylinders befindet.

6. Aufhängungssystem nach einem der vorstehenden Ansprüche, wobei jeder hintere Radzylinder (14, 13) eine Rückprallkammer (52, 51) enthält, wobei sich die Kompressionskammer (48, 47) jedes hinteren Radzylinders in direkter Fluidkommunikation mit der Rückprallkammer des jeweiligen lateral angrenzenden Radzylinders befindet.

7. Aufhängungssystem nach einem der Ansprüche 1 bis 4, wobei jeder vordere Radzylinder eine Rückprallkammer enthält und jeder hintere Radzylinder eine Rückprallkammer enthält, wobei sich die Kompressionskammer jedes Radzylinders in direkter Fluidkommunikation mit der Rückprallkammer des lateral angrenzenden Radzylinders befindet.

8. Aufhängungssystem nach Anspruch 1, wobei der Fahrzeugkörper primär durch ein elastisches Fahrzeugstützmittel gestützt wird.

9. Aufhängungssystem nach Anspruch 2, wobei das Fahrzeugstützmittel für das mindestens eine Ende des Fahrzeugs ein erstes Stützmittel enthält, um mindestens einen Teil der Last auf dem Fahrzeug zu stützen, wobei das erste Stützmittel Rollsteifigkeit bereitstellt.

10. Aufhängungssystem nach Anspruch 2, wobei das Fahrzeugstützmittel für das mindestens eine Ende des Fahrzeugs zweite Stützmittel enthält, um mindestens einen Teil der Last auf dem Fahrzeug zu stützen, wobei das zweite Stützmittel im Wesentlichen keine Rollsteifigkeit bereitstellt.

11. Aufhängungssystem nach Anspruch 1, wobei der mindestens eine Fluiddruckakkumulator (69, 70, 72, 71) für eines oder mehrere des vorderen linken, vorderen rechten, hinteren linken und/oder hinteren rechten Fluidvolumen bereitgestellt ist, wobei sich jeder Akkumulator in Fluidkommunikation mit dem jeweiligen Fluidvolumen befindet.

12. Aufhängungssystem nach Anspruch 11, ferner enthaltend Dämpfmittel (73, 74, 76, 75) zum Dämpfen des Fluidstroms in und/oder aus dem mindestens einen der Akkumulatoren.

13. Aufhängungssystem nach Anspruch 1, ferner enthaltend eine Druckaufrechterhaltungsvorrichtung (126), die über jeweilige Drosselungen oder Ventile mit mindestens zwei der Fluidvolumen verbunden ist.

14. Aufhängungssystem nach Anspruch 13, wobei die Druckaufrechterhaltungsvorrichtung ein einfacher Akkumulator ist, der über eine Drosselung mit einem oder mehreren der Fluidvolumen verbunden ist.

15. Aufhängungssystem nach Anspruch 13, wobei die Druckaufrechterhaltungsvorrichtung eine Pumpe, einen Behälter und Fluidtransfersteuervorrichtungen zum Steuern der Drucke in den linken und rechten Fluidvolumen und/oder in den vorderen und hinteren Fluidvolumen enthält.

16. Aufhängungssystem nach Anspruch 15, wobei die Drucke so gesteuert werden, dass sie in den linken Fluidvolumen anders sind als in den rechten Fluidvolumen, um Rollagesteuerung entweder bei einer niedrigen Frequenz oder aktiv bei einer höheren Frequenz bereitzustellen.

17. Aufhängungssystem nach Anspruch 15, wobei die Drucke so gesteuert werden, dass sie in den vorderen Fluidvolumen anders sind als in den hinteren Fluidvolumen, um Rollmomentverteilungssteuerung entweder bei einer niedrigen Frequenz oder aktiv bei einer höheren Frequenz bereitzustellen.

18. Aufhängungssystem nach Anspruch 4, wobei das Sperrventil manuell oder automatisch gesteuert wird, um zwischen dem Zulassen einer Fluidkommunikation und dem Verhindern einer Fluidkommunikation umzuschalten.

19. Aufhängungssystem nach Anspruch 4 oder 18, wobei das Sperrventil gesteuert wird, um zwischen einer Onroad-Einstellung mit Neigungssteifigkeit und einer Offroad-Einstellung ohne Neigungssteifigkeit, jedoch unter Aufrechterhaltung einer Rollsteifigkeit, umzuschalten.

20. Aufhängungssystem nach Anspruch 4 oder 18, wobei das Sperrventil gesteuert wird, um zwischen zwei unterschiedlichen Einstellungen der Rollmomentverteilung des Hydrauliksystems umzuschalten.

21. Aufhängungssystem nach Anspruch 4, wobei das Sperrventil bei Normalbetrieb Fluidkommunikation zulässt und zum Schließen gesteuert wird, um ein Anheben der Räder zu verhindern, oder bei einem Ausfall im Hydrauliksystem.

22. Aufhängungssystem nach Anspruch 1, wobei das erste Strömungssteuermittel ein linkes längliches Strömungssteuermittel ist und das zweite Strömungssteuermittel ein rechtes längliches Strömungssteuermittel ist, wobei jedes längliche Strömungssteuermittel ein Dämpfmittel enthält, wobei das Dämpfmittel eine passive Drosselung oder ein passives Mehrstufen-Dämpfventil ist.

23. Aufhängungssystem nach Anspruch 1, wobei das erste Strömungssteuermittel ein linkes längliches Strömungssteuermittel ist und das zweite Strömungssteuermittel ein rechtes längliches Strömungssteuermittel ist, wobei jedes längliche Strömungssteuermittel ein Dämpfmittel enthält, wobei das Dämpfmittel gesteuert wird, um eine variable Drosselung in Abhängigkeit eines erfassten Fahrzeugbetriebs oder in Abhängigkeit von erfassten Fahrzeugereignissen bereitzustellen.

24. Aufhängungssystem nach Anspruch 1, ferner enthaltend mindestens ein Ventil zum selektiven Verbinden der vorderen Fluidvolumen und/oder mindestens ein Ventil zum selektiven Verbinden der hinteren Fluidvolumen zum Entfernen der Rollsteifigkeit des Hydrauliksystems.

## Revendications

1. Système de suspension pour un véhicule, le véhicule incluant une carrosserie de véhicule et au moins deux ensembles de roues avant et deux arrière, le système de suspension incluant un système hydraulique, le système hydraulique incluant :
au moins un piston de roue avant gauche (11), au moins un avant droit (12), au moins un arrière gauche (14) et au moins un arrière droit (13) respectivement situés entre les ensembles de roues et la carrosserie de véhicule, chaque piston de roue incluant au moins une chambre de compression (45, 46, 48, 47) ;
la chambre de compression de chaque piston de roue étant en communication fluide avec un conduit de compression respectif (61, 62, 64, 63) formant un volume fluide avant gauche (45, 61), un volume fluide avant droit (46, 62), un volume fluide arrière gauche (48, 64) et un volume fluide arrière droit (47, 63) ;
le système hydraulique incluant en outre un premier moyen régulation d'écoulement (100) et un deuxième moyen de régulation d'écoulement (101) ;
les volumes fluides avant gauche et arrière gauche étant en communication fluide avec le premier moyen de régulation d'écoulement, le premier moyen de régulation d'écoulement régulant la communication fluide entre les volumes fluides avant gauche et avant droit ; et
les volumes fluides avant droit et arrière droit étant en communication fluide avec le deuxième moyen de régulation d'écoulement, le deuxième moyen de régulation d'écoulement régulant la communication fluide entre les volumes fluides avant droit et arrière droit,
de telle sorte que des mouvements de roulis du véhicule soient contrariés par le système hydraulique et quand un fluide est autorisé à s'écouler à travers les premier et deuxième moyens de régulation d'écoulement des mouvements de voilage des roues par rapport à la carrosserie du véhicule soient autorisés par le système hydraulique ; et
une valve d'amortisseur de chambre de compression (53, 54, 56, 55) entre la chambre de compression de chaque piston de roue et le conduit de compression respectif ;
le système de suspension étant **caractérisé par** au moins deux des pistons de roue à une extrémité du véhicule incluant en outre une chambre de rebond (49, 50, 52, 51), chaque chambre de rebond étant en communication fluide avec la chambre de compression du piston de roue latéralement adjacent (49, 12 ; 50, 11 ; 51, 14 ; 52, 13) ;
et par chaque chambre de rebond incluant une valve d'amortisseur de chambre de rebond (57, 58, 60, 59) en communication fluide directe avec la valve d'amortisseur de chambre de compression de la chambre de compression d'un piston de roue latéralement adjacent.

2. Système de suspension selon la revendication 1, le système de suspension incluant en outre des moyens de support de véhicule élastiques avant et arrière (27, 28, 30, 29) entre la carrosserie de véhicule et les ensembles de roues pour supporter de manière élastique le véhicule au-dessus des ensembles de roues.

3. Système de suspension selon la revendication 1, dans lequel les premier et/ou deuxième moyens de régulation d'écoulement incluent un moyen d'amortissement.

4. Système de suspension selon la revendication 1, dans lequel les premier et/ou deuxième moyens de régulation d'écoulement incluent une valve de verrouillage.

5. Système de suspension selon l'une quelconque des revendications précédentes, dans lequel chaque vérin de roue avant (11, 12) inclut une dite chambre de rebond (49, 50), la chambre de compression (45, 46) de chaque vérin de roue avant étant en communication fluide directe avec la chambre de rebond du vérin de roue latéralement adjacent respectif.

6. Système de suspension selon l'une quelconque des revendications précédentes, dans lequel chaque vérin de roue arrière (14, 13) inclut une dite chambre de rebond (52, 51), la chambre de compression (48, 47) de chaque vérin de roue arrière étant en communication fluide directe avec la chambre de rebond du vérin de roue latéralement adjacent respectif.

7. Système de suspension selon l'une quelconque des revendications 1 à 4, dans lequel chaque vérin de roue avant inclut une chambre de rebond et chaque vérin de roue arrière inclut une chambre de rebond, la chambre de compression de chaque vérin de roue étant en communication fluide directe avec la chambre de rebond du vérin de roue latéralement adjacent.

8. Système de suspension selon la revendication 1, dans lequel la carrosserie de véhicule est essentiellement supportée par un moyen de support de véhicule élastique.

9. Système de suspension selon la revendication 2, dans lequel le moyen de support de véhicule pour au moins une extrémité du véhicule inclut un premier moyen de support destiné à apporter un support pour au moins une partie de la charge sur le véhicule, le premier moyen de support apportant une rigidité au roulis.

10. Système de suspension selon la revendication 2, dans lequel le moyen de support de véhicule pour au moins une extrémité du véhicule inclut un deuxième moyen de support destiné à apporter un support pour au moins une partie de la charge sur le véhicule, le deuxième moyen de support apportant une rigidité au roulis sensiblement nulle.

11. Système de suspension selon la revendication 1, dans lequel au moins un accumulateur de pression de fluide (69, 70, 72, 71) est fourni pour un ou plusieurs des volumes fluides avant gauche, avant droit, arrière gauche et/ou arrière droit, chaque accumulateur étant en communication fluide avec le volume fluide respectif.

12. Système de suspension selon la revendication 11, incluant en outre un moyen d'amortissement (73, 74, 76, 75) destiné à amortir l'écoulement de fluide dans et/ou hors d'au moins l'un des accumulateurs.

13. Système de suspension selon la revendication 1, incluant en outre un dispositif de maintien de pression (126) connecté à au moins deux des volumes fluides à travers des restrictions ou valves respectives.

14. Système de suspension selon la revendication 13, dans lequel le dispositif de maintien de pression est un accumulateur simple connecté par le biais d'une restriction à un ou plusieurs volumes fluides.

15. Système de suspension selon la revendication 13, dans lequel le dispositif de maintien de pression inclut une pompe, une cuve et des équipements de régulation de transfert de fluide pour réguler les pressions dans les volumes fluides gauches et droits et/ou les volumes fluides avant et arrière.

16. Système de suspension selon la revendication 15, dans lequel les pressions sont régulées pour être différentes dans les volumes fluides gauches et les volumes fluides droits pour apporter une régulation d'attitude de roulis, soit à basse fréquence, soit activement à plus haute fréquence.

17. Système de suspension selon la revendication 15, dans lequel les pressions sont régulées pour être différentes dans les volumes fluides avant et les volumes fluides arrière pour apporter une régulation de distribution de moment de roulis, soit à basse fréquence, soit activement à plus haute fréquence.

18. Système de suspension selon la revendication 4, dans lequel la valve de verrouillage est régulée manuellement ou automatiquement pour basculer entre l'autorisation de la communication fluide et la prévention de la communication fluide.

19. Système de suspension selon la revendication 4 ou 18, dans lequel la valve de verrouillage est régulée pour basculer entre un réglage sur route avec rigidité au voilage ou un réglage hors route sans rigidité au voilage, mais en maintenant une rigidité au roulis.

20. Système de suspension selon la revendication 4 ou 18, dans lequel la valve de verrouillage est régulée pour basculer entre deux réglages différents de distribution de moment de roulis du système hydraulique.

21. Système de suspension selon la revendication 4, dans lequel la valve de verrouillage permet une communication fluide en fonctionnement normal et est régulée pour se fermer pour empêcher les roues de se lever ou en cas de panne du système hydraulique.

22. Système de suspension selon la revendication 1, dans lequel le premier moyen de régulation d'écoulement est un moyen de régulation d'écoulement longitudinal gauche et le deuxième moyen de régulation d'écoulement est un moyen de régulation d'écoulement longitudinal droit, chaque moyen de régulation d'écoulement longitudinal incluant un moyen d'amortisseur, le moyen d'amortisseur étant une valve d'amortisseur de restriction passive ou une valve d'amortisseur multi-étage passive.

23. Système de suspension selon la revendication 1, dans lequel le premier moyen de régulation d'écoulement est un moyen de régulation d'écoulement longitudinal gauche, et le deuxième moyen de régulation d'écoulement est un moyen de régulation d'écoulement longitudinal droit, chaque moyen de régulation d'écoulement longitudinal incluant un moyen d'amortisseur, le moyen d'amortisseur étant régulé pour apporter une restriction variable en fonction du fonctionnement du véhicule ou d'événements détectés.

24. Système de suspension selon la revendication 1, incluant en outre au moins une valve pour interconnecter sélectivement les volumes fluides avant et/ou au moins une valve pour interconnecter sélectivement les volumes fluides arrière pour supprimer la rigidité au roulis du système hydraulique.
